# EUROPEAN PATENT SPECIFICATION

(11) **EP 1 607 662 B1**
(45) Date of publication and mention of the grant of the patent: **05.05.2010**
(21) Application number: 04721372.3
(22) Date of filing: 17.03.2004
(51) Int. Cl.: F16J 15/08

(54) **METAL GASKET FOR CYLINDER HEAD**
METALLDICHTUNG FÜR ZYLINDERKOPF
JOINT D'ETANCHEITE STATIQUE METALLIQUE POUR CULASSE DE CYLINDRE

(30) Priority: 17.03.2003 JP 2003072730; 17.03.2003 JP 2003072638; 17.03.2003 JP 2003072547
(43) Date of publication of application: 21.12.2005
(73) Proprietor: NIPPON LEAKLESS INDUSTRY Co., Ltd., Minato-ku, Tokyo 105-0004 (JP); HONDA GIKEN KOGYO KABUSHIKI KAISHA, Minato-ku, Tokyo 107-8556 (JP)
(72) Inventor: HAMADA, Yoshiaki,NIPPON LEAKLESS INDUSTRY CO. LTD., Saitama 3360931 (JP); YAJIMA, Takashi,NIPPON LEAKLESS INDUSTRY CO. LTD., Saitama 3360931 (JP); MURAKAMI, Yasunori,HONDA GIJUTSU KENKYUSHO, Saitama 3510193 (JP); KATSURAI, Takashi,HONDA GIJUTSU KENKYUSHO, Saitama 3510193 (JP); TABATA, Masamune, HONDA GIJUTSU KENKYUSHO, Saitama 3510193 (JP)
(74) Representative: Paget, Hugh Charles Edward
(86) International application number: PCT/JP2004/003609
(87) International publication number: WO 2004/083690

(56) References cited:
- GB-A- 931 710
- JP-A- 6 129 540
- JP-A- 7 229 564
- JP-A- 05 223 173
- JP-A- 07 229 564
- JP-A- 08 178 071
- JP-A- 08 285 081
- JP-A- 09 166 219
- JP-A- 11 159 623
- JP-A- 63 096 360

## Description

### Technical Field

This invention relates to a metal gasket for a cylinder head to be interposed between a cylinder block and a cylinder head of an internal combustion engine.

### Background Art

As a metal gasket of this type, for example, there is known a metal gasket including two base plates respectively made of metal plates, and an auxiliary plate having a thinner plate thickness than those base plates and interposed between those base plates, in which each of the base plates includes cylinder holes formed so as to correspond to respective cylinder bores of a cylinder block of an internal combustion engine, annular beads of an angled cross-sectional shape formed around the respective cylinder holes, and coolant holes formed on outer peripheral portions of the respective annular beads so as to correspond to coolant jackets on the cylinder block and to coolant holes on a cylinder head of the internal combustion engine, while the auxiliary plate includes cylinder holes and coolant holes as similar to those formed on the base plates. In this metal gasket, the auxiliary plate may be provided with a step structure configured to increase the thickness of cylinder hole peripheral portions overlapping the annular beads around the respective cylinder holes on the base plates as compared to outer portions located further outside so as to raise line pressures of the annular beads of the base plates and thereby to improve a sealing performance against combustion gas inside cylinders.

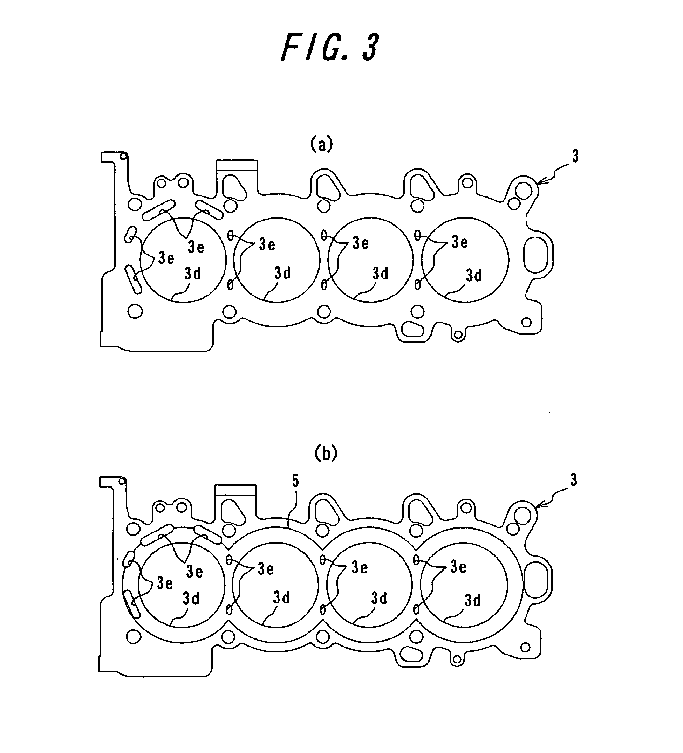

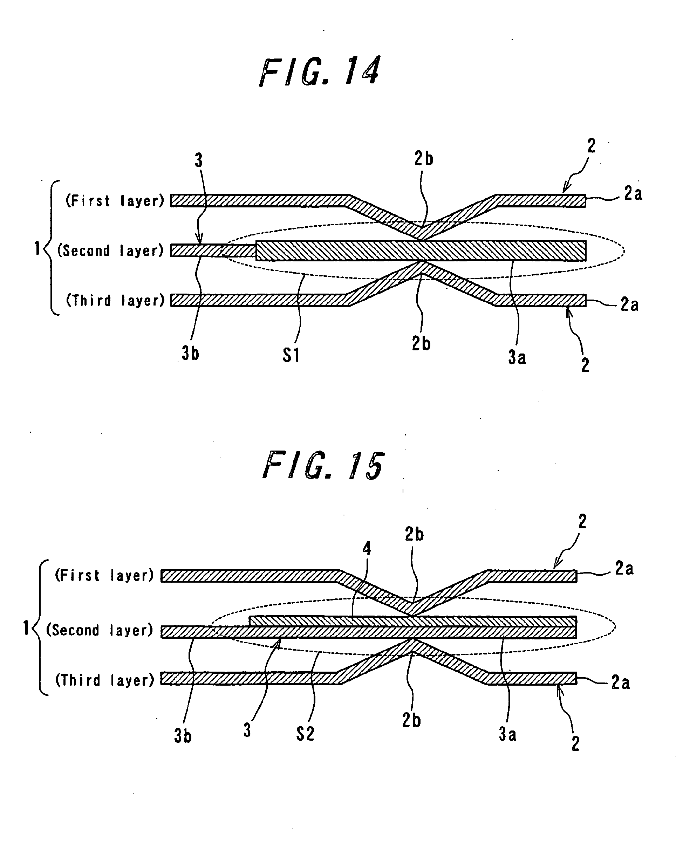

As the step structure, there has been conventionally known a step structure S1 as shown in FIG.14, for example, in which an auxiliary plate 3 to be interposed between two base plates 2 respectively made of steel plates (such as SUS 301H 0.2t) is formed of thin steel plates (such as SUS 301H 0.2t or 0.3t) having different plate thicknesses between a cylinder hole peripheral portion 3a overlapping an annular bead 2b around each cylinder hole 2a on each base plate 2 and an outer portion 3b located on outside thereof so as to provide a given step, and the cylinder hole peripheral portion 3a and the outer portion 3b are joined together by laser welding (see Japanese Unexamined Patent Publication No. 7(1995) - 243531, FIG. 3, for example). Here, reference numeral 1 in the drawing denotes a metal gasket, and reference code LW denotes a laser-welded portion.

Meanwhile, there has also been known a step structure S2 as shown in FIG. 15, for example, in which an auxiliary plate 3 made of a thin steel plate having a single plate thickness (such as SUS 301H 0.1t) to be interposed between two base plates 2 respectively made of steel plates. Here, the auxiliary plate 3 is provided with a given step by stacking a shim plate 4 also made of a thin steel plate (such as SUS 301H 0.1t) on a cylinder hole peripheral portion 3a overlapping an annular bead 2b around each cylinder hole 2a on each base plate 2, and the auxiliary plate 3 and the shim plate 4 are joined together by laser welding (see Japanese Unexamined Patent Publication No. 10(1998) - 61772, for example).

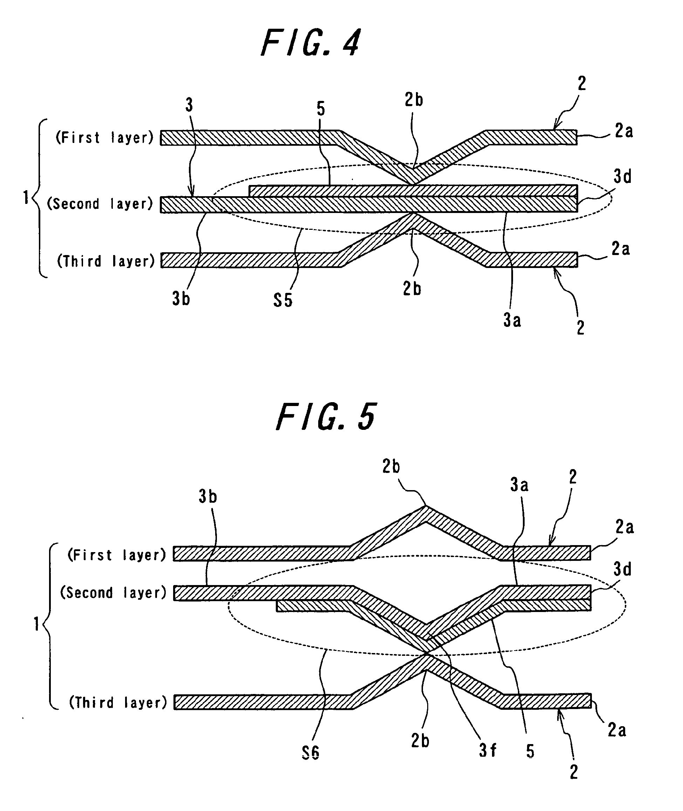

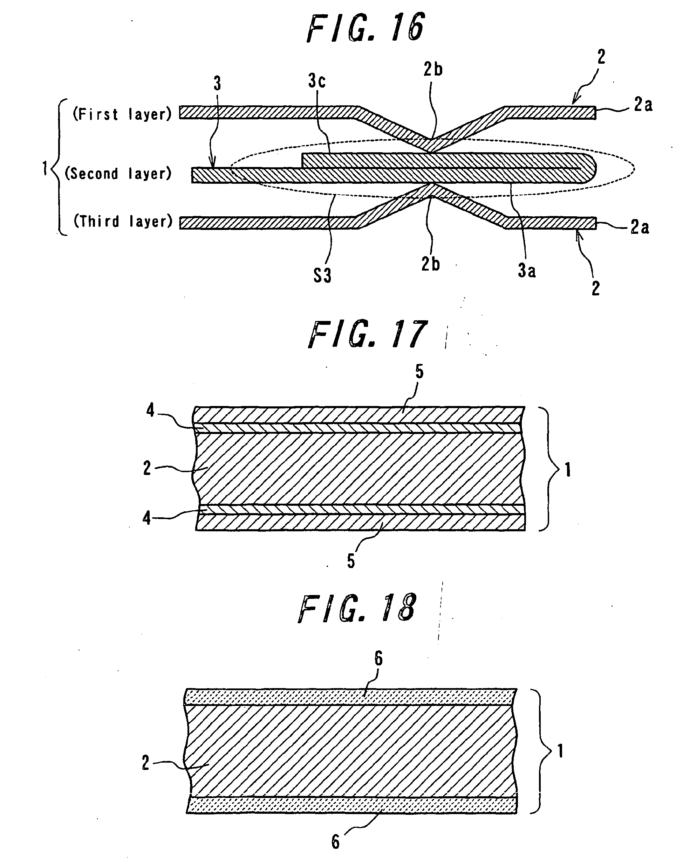

In addition, there has also been known a step structure S3 as shown in FIG.16, for example, in which an auxiliary plate 3 made of a thin steel plate having a single plate thickness (such as SUS 301H 0.05t) to be interposed between two base plates 2 respectively made of steel plates. Here, the auxiliary plate 3 is provided with a given step by forming a folded portion 3c at a cylinder hole peripheral portion 3a overlapping an annular bead 2b around each cylinder hole 2a on each base plate 2 in accordance with a bending and folding process (see Japanese Unexamined Patent Publication No. 8(1996) - 121597, FIG. 4, for example).

However, in the conventional step structure S1 described in the first place, it is difficult to align the cylinder hole peripheral Moreover JP 0724 3531 discloses a metal gasket for a cylinder head comprising two base plates respectively made of metal plates and layered over each other, each of said base plates including cylinder holes formed so as to correspond to respective cylinder bores on a cylinder block of an internal combustion engine, annular beads formed around said respective cylinder holes, coolant holes formed on outer peripheral portions with respect to said respective annular beads so as to correspond to coolant jackets on said cylinder block and to coolant holes on a cylinder head of said internal combustion engine ; said two base plates being
layered over each other with an auxiliary plate made of metal plate interposed between them;
wherein, at the location of each said annular bead a metal-plate is formed on one surface of said auxiliary plate ;
said metal-plate being configured to extend from a position more radially inward than the respective annular bead to a position radially outward so as to overlap the respective opposed annular bead of said base plates and to face a top portion of the respective opposed annular bead, and thereby to surround each of said cylinder holes on said base plate annularly portions 3a with the outer portions 3b to form a predetermined gasket shape. Accordingly, there has been a problem that a gasket becomes expensive because an exclusive alignment jig and a high-precision laser welding machine are indispensable for satisfying high precision required in the gasket shape.

Meanwhile, in the conventional step structure S2 described in the second place, the plate thickness of the shim plate 4 is equivalent to the amount of the step and the plate thickness of the thin steel plate distributed in the industry is incremented by 50 µm (0.05 mm) at present. Therefore, it is not possible to set the amount of the step at high accuracy in the 10-µm (0.01-mm) order and it is also difficult to ensure the function of the step with a thin plate having the thickness equal to or below 100 µm due to occurrence of distortion, deformation or a lift caused by laser welding. Moreover, an exclusive alignment jig and a high-precision laser welding machine are indispensable as similar to the first step structure. Accordingly, there has been a problem that a gasket becomes expensive.

Meanwhile, in the conventional step structure S3 described in the third place, the thin steel plate having the single plate thickness is subjected to the bending and folding process and the plate thickness becomes equal to the amount of the gap. Therefore, it is not possible to set the amount of the step at high accuracy in the 10-µm (0.01-mm) order as similar to the second step structure S2. In addition, the bending and folding process is carried out by use of a drawing process, and the degree of freedom is reduced in terms of the shape of the folded portion 3c. Accordingly, there has been a problem that it is difficult to form the folded portion 3c having a sufficient width in a radial direction without causing cracks especially by use of the thin steel plate.

Moreover, as a metal gasket of this type, there has been conventionally known a metal gasket 1 as shown in FIG. 17, for example, which includes a base plate 2 made of a metal thin plate, and rubber layers 5 as surface sealing layers made of NBR, fluorine rubber, silicon rubber or the like, which are attached to both surfaces of the base plate 2 with an adhesive 4 so as to cover the entire surfaces of the base plate 2 (see Japanese Unexamined Patent Publication No. 2(1990) - 38760 and the attached drawings, for example).

Furthermore, there has also been conventionally known a metal gasket 1 as shown in FIG. 18, for example, which includes a base plate 2 made of a metal thin plate, and solid lubricant layers 6 as surface sealing layers formed by mixing graphite or molybdenum disulfide powder with a small amount of binder (resin or rubber), which are coated on both surfaces of the base plate 2 so as to cover the entire surfaces of the base plate 2 (see Japanese Unexamined Patent Publication No. 5(1993) - 17737, for example).

However, in the former conventional metal gasket, the surface sealing layer is made of a rubber material and durability is therefore insufficient under a high temperature environment. Accordingly, there has been a problem that the rubber material may be decomposed or peeled off when continuously used in an environment equal to or above 200°C.

Meanwhile, in the latter conventional metal gasket, the surface sealing layer is made of a solid lubricant material and it is difficult to retain a uniform layer on the surface of the base plate. Accordingly, there have been problems that it is difficult to ensure a sufficient sealing property and that the degree of freedom of a bead structure is also reduced.

### Disclosure of the Invention

An object of a metal gasket for a cylinder head according to this invention is to provide an excellent metal gasket capable of solving the foregoing problems advantageously, which is low in price and high in the freedom in controlling an amount of a step. The metal gasket of the invention is set out in claim 1.

With this metal gasket for a cylinder head , the hard metal-plated layer formed in case (ii) on at least one surface of the auxiliary plate interposed between the two base plates extends from the position more radially inward than each of the annular beads of the base plate to the position radially outward so as to overlap the annular bead of the base plate and to face the top portion of the annular bead, and thereby constitutes a step structure by annularly surrounding the respective cylinder holes on the base plates. Therefore, line pressure to be applied to the top portions of the annular beads on the two base plates is increased, and it is possible to exert a high sealing performance against combustion gas pressure inside the cylinder bores. Moreover, the hard metal-plated layer is made of metal. Therefore, it is possible to maintain the high sealing performance as the step structure for the annular beads around the cylinder holes exposed to high heat in particular. Meanwhile, since the hard metal-plated layer is formed in accordance with a plating process, it is also easy to adjust the thickness thereof. In this way, it is possible to obtain an amount of the step easily for optimizing balance of constriction forces between the annular bead and the outer peripheral bead.

Here, in the metal gasket of this invention, an annular bead having an angled cross-sectional shape may be formed on the auxiliary plate so as to overlap the annular bead on the base plate and to allow top positions to face each other. The annular beads are stacked in three layers in this configuration, and it is possible to obtain a higher sealing performance.

Furthermore, with the metal gasket for a cylinder head of the invention , the hard metal-plated layer formed in case (i) on either one or both of the two base plates on the surface facing the other base plate extends from the position more radially inward than the annular bead to the position radially outward so as to overlap each of the annular beads of the base plate and to face the top portion of the annular bead, and thereby constitutes a step structure by annularly surrounding the respective cylinder holes on the base plates. Therefore, line pressure to be applied to the top portions of the annular beads on the two base plates is increased even in the case of the metal gasket including the two sheets, and it is possible to exert a high sealing performance against combustion gas pressure inside the cylinder bores. Moreover, according to this metal gasket, the hard metal-plated layer is made of metal. Therefore, it is possible to maintain the high sealing performance as the step structure for the annular beads around the cylinder holes exposed to high heat in particular. Meanwhile, since the hard metal-plated layer is formed in accordance with the plating process, it is also easy to adjust the thickness thereof. In this way, it is possible to obtain an amount of the step easily for optimizing balance of constriction forces between the annular bead and the outer peripheral bead.

In this invention, the hard metal-plated layer is preferably made of any of nickel, nickel-phosphorus, and copper, and preferably has the hardness equal to or above Hv 60, because the hard metal-plated layer can bear the high line pressure applied to the top portions of the annular beads of the two base plates without crushing and thereby prevent degradation of the sealing performance.

Meanwhile, in this invention, distribution of the amount of the step of the hard metal-plated layer relevant to the plurality of cylinder holes corresponds to distribution of rigidity of the internal combustion engine relevant to the plurality of cylinder bores, because the sealing performance is well balanced by increasing the amount of the step at a less rigid portion of the internal combustion engine as compared to a more rigid portion.

### Brief Description of the Drawings

FIG. 1 is a plan view showing the entirety of Example 1 (Reference Example) of a metal gasket for a cylinder head.
FIG. 2 is a cross-sectional view of the metal gasket of the above-described Example 1, which is taken along the A-A line in FIG. 1.
FIGs. 3(a) and 3(b) are explanatory views showing a method of providing a hard metal-plated layer on an auxiliary plate of the metal gasket of the above-described Example 1.
FIG. 4 is a cross-sectional view of a metal gasket for a cylinder head according to Example 5 of this invention in a similar position to FIG. 1.
FIG. 5 is a cross-sectional view of a metal gasket for a cylinder head according to Example 38 of this invention in a similar position to FIG. 1.
FIG. 6 is a cross-sectional view of a metal gasket for a cylinder head according to Example 39 of this invention in a similar position to FIG. 1.
FIG. 7 is a cross-sectional view of a metal gasket for a cylinder head according to Example 40 of this invention in a similar position to FIG. 1.
FIG. 8 is a cross-sectional view of a metal gasket for a cylinder head according to Example 41 of this invention in a similar position to FIG. 1.
FIG. 9 is an explanatory view showing a measuring method for sealing limit pressure of metal gaskets 1 according to the above-described examples and comparative examples.
FIGs. 10(a) to 10(d) are explanatory views respectively showing sealing performances in terms of a comparative example without a step structure and examples of this invention.
FIGs. 11(a) to 11(c) are explanatory views respectively showing sealing performances in terms of the comparative example without the step structure, a comparative example with a metal plated layer of a different material, and the example of this invention.
FIGs. 12(a) to 12(d) are explanatory views respectively showing sealing performances in terms of the comparative example setting constant amounts of steps and examples of this invention.
FIGs. 13(a) to 13(d) are explanatory views respectively showing sealing performances in terms of another comparative example setting constant amounts of steps and examples of this invention.
FIG. 14 is a cross-sectional view showing an example of a step structure of a conventional gasket for a cylinder head in a similar position to FIG. 1.
FIG. 15 is a cross-sectional view showing another example of a step structure of a conventional metal gasket for a cylinder head in a similar position to FIG. 1
FIG. 16 is a ross-sectional view showing still another example of a step structure of a conventional metal gasket for a cylinder head in similar position to FIG. 1.
FIG. 17 is a cross-sectional view showing an example of a surface sealing layer of a conventional metal gasket for a cylinder head.
FIG. 18 is a cross-sectional view showing another example of a surface sealing layer of a conventional metal gasket for a cylinder head.

### Best Modes for Carrying Out the Invention

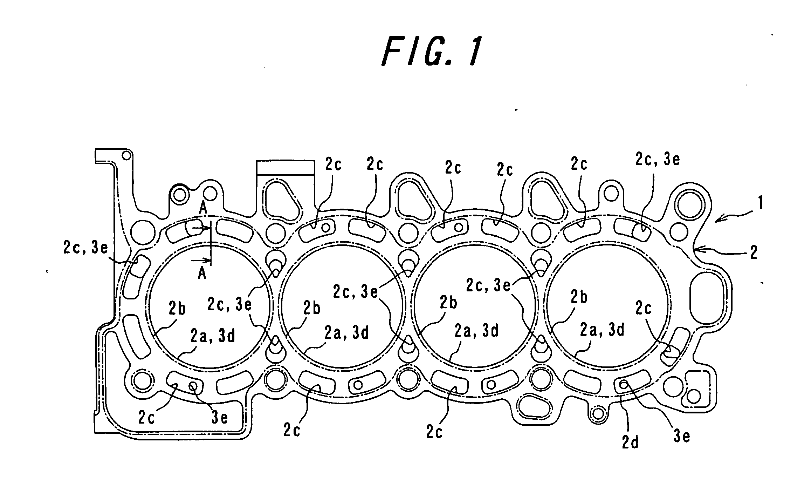

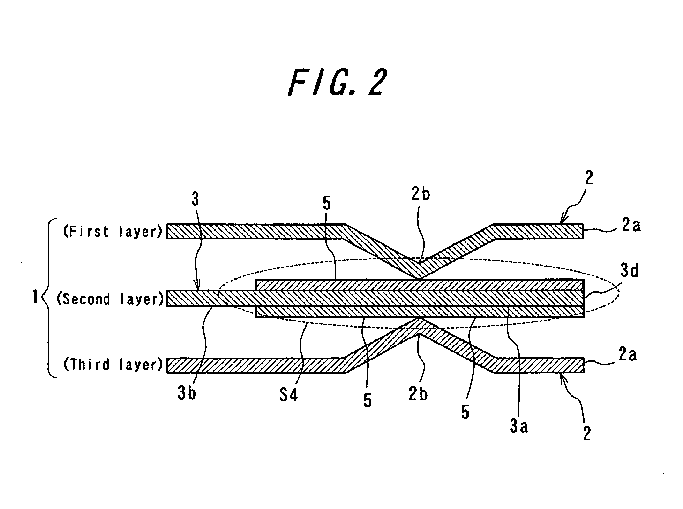

An embodiment according to this invention will be described below by use of examples and based on the accompanying drawings. Here, FIG. 1 is a plan view showing the entirety of Example 1 (Reference Example) of a metal gasket for a cylinder head. FIG. 2 is a cross-sectional view taken along the A-A line in FIG. 1. FIGs. 3(a) and 3(b) are explanatory views showing a method of providing a hard metal-plated layer on an auxiliary plate of the metal gasket of the above-described Example 1. In these drawings, similar portions to those shown in FIG. 29 to FIG. 31 described above are indicated with the same reference numerals. Specifically, reference numeral 1 denotes a metal gasket, reference numeral 2 denotes a base plate, and reference numeral 3 denotes an auxiliary plate, respectively.

The metal gasket 1 for a cylinder head of the above-described Example 1 includes two base plates 2 layered over each other, which are made of a steel plate (SUS 301H 0.2t) subjected to rubber coating of a rubber layer made of NBR in the thickness of 25 µm only onto respective outer side surfaces (surfaces facing a cylinder block and a cylinder head), and an auxiliary plate 3 made of a steel plate (SUS 301H 0.2t) without rubber coating which is to be interposed between the base plates 2.

As shown in FIG. 1, each of the two base plates 2 herein includes four cylinder holes 2a formed so as to correspond respectively to four cylinder bores on the cylinder block of an internal combustion engine (the cylinder holes 2a correspond sequentially to the cylinder bores #1, #2, #3, and #4 from the left in FIG. 1), annular beads 2b of an angled cross-sectional shape (so-called a full bead shape) formed around the respective cylinder holes 2a, a plurality of coolant holes 2c formed at outer peripheral portions of the respective annular beads 2b so as to correspond to coolant jackets on the cylinder block and to coolant holes on the cylinder head of the above-described internal combustion engine, and an outer peripheral bead 2d of a cross-sectional shape sloping on one side (so called a half bead shape) which is formed in a position so as to totally surround the plurality of annular beads 2b and the plurality of coolant holes 2c located in the peripheries thereof.

Moreover, as shown in FIG. 3(a), the auxiliary plate 3 herein includes cylinder holes 3d corresponding to the respective cylinder holes 2a on the base plates 2, and coolant holes 3e corresponding to some of the coolant holes 2c on the above-described base plates 2.

As shown in FIG. 2, the metal gasket 1 for a cylinder head of this Example 1 further includes hard metal-plated layers 5 on both surfaces of the auxiliary plate 3 in the total thickness for the both surfaces in a range from 49 to 51 µm (see Table 1-1 for more detail). As shown in FIG. 3(b), these hard metal-plated layers 5 are made of nickel (the hardness equal to Hv 255) formed on peripheral portions of the respective cylinder holes 3d on the both surfaces of the auxiliary plate 3 in accordance with an electroplating process or a molten metal plating process, for example. When the hard metal-plated layers 5 are interposed between the two base plates 2 together with the auxiliary plate 3, the hard metal-plated layers 5 extend from positions more radially inward than the annular beads 2b to positions radially outward so as to overlap the respective annular beads 2b of the base plates 2 and to face top portions of the annular beads 2b, and thereby annularly surround the respective cylinder holes 3d on the auxiliary plate 3 and eventually the respective cylinder holes 2a on the base plates 2 corresponding thereto.

According to the metal gasket 1 of the above-described Example 1, the hard metal-plated layers 5 formed on the both surfaces of the auxiliary plate 3 to be interposed between the two base plates 2 extend from the positions more radially inward than the annular beads 2b to the positions radially outward so as to overlap the respective annular beads 2b of the base plates 2 and to face the top portions of the annular beads 2b, and surround the respective cylinder holes 2a on the base plates 2 annularly to constitute a step structure S4 having an amount of the step approximately equal to 50 µm. Therefore, line pressure to be applied to the top portions of the annular beads 2b of the two base plates 2 is increased, and it is possible to exert a high sealing performance against combustion gas pressure inside the cylinder bores as will be described later.

Moreover, according to the metal gasket 1 of this Example 1, the hard metal-plated layer 5 is made of nickel. Therefore, it is possible to maintain the high sealing performance as the step structure for the annular beads 2b around the cylinder holes 2a exposed to high heat in particular. Meanwhile, since the hard metal-plated layer 5 is formed in accordance with a plating process, it is also easy to adjust the layer thickness thereof. In this way, it is possible to obtain an amount of the step easily for optimizing balance of constriction forces between the annular bead 2b and the outer peripheral bead 2d.

In addition, according to the metal gasket 1 of this Example 1, the outer surfaces of the respective steel plates in the two base plates 2 are subjected to rubber coating to be covered with the rubber layers. Therefore, it is possible to improve the sealing performance as the rubber layers-perform a function as micro sealing by burying small scratches and processing scars on deck surfaces of the cylinder block and the cylinder head.

Here, one which applies a similar configuration to Example 1 including the nickel hard metal-plated layers 5 on the both surfaces of the flat auxiliary plate 3 except that the total thicknesses (the amounts of the steps) of the hard metal-plated layers 5 are set uniformly equal to 80 µm in terms of the four cylinder holes 2a will be defined as Example 2 (Reference Example) of the metal gasket for a cylinder head. According to this Example 2, the amount of the step is greater than Example 1. Therefore, it is possible to exert a higher sealing performance than Example 1 as will be described later.

Moreover, one which applies a similar configuration to Example 1 including the nickel hard metal-plated layers 5 on the both surfaces of the flat auxiliary plate 3 except that the total thicknesses (the amounts of the steps) of the hard metal-plated layers 5 are set respectively equal to 49 µm, 81 µm, 79 µm, and 50 µm from the left in FIG. 1 in terms of the four cylinder holes 2a, so as to correspond to the case where rigidity distribution of the internal combustion engine concerning the four cylinder bores of the internal combustion engine is lower in #2 and #3 than in #1 and #4, will be defined as Example 3 of the metal gasket for a cylinder head of this invention. In addition, one which applies a similar configuration to Example 1 including the nickel hard metal-plated layers 5 on the both surfaces of the flat auxiliary plate 3 except that the total thicknesses (the amounts of the steps) of the hard metal-plated layers 5 are set respectively equal to 47 µm, 105 µm, 103 µm, and 50 µm from the left in FIG. 1 in terms of the four cylinder holes 2a, so as to correspond to the case where the rigidity distribution of the internal combustion engine concerning the four cylinder bores of the internal combustion engine is lower in #2 and #3 than in #1 and #4, will be defined as Example 4 of the metal gasket for a cylinder head of this invention. According to these Examples 3 and 4, the amounts of the steps correspond to the rigidity distribution of the internal combustion engine. Therefore, it is possible to exert higher sealing performances than the foregoing examples as will be described later.

FIG. 4 is a cross-sectional view of the metal gasket for a cylinder head according to Example 5 (Reference Example) in a similar position to FIG. 1. The metal gasket 1 of this Example 2 is only different from the foregoing-Example 1 in that the hard metal-plated layer 5 is provided on one surface (which is an upper surface in the drawing) of the auxiliary plate 3 in the thickness from 49 to 51 µm (see Table 1-1 for more detail), which is made of nickel (the hardness equal to Hv 255) and formed by an electroplating process or a molten metal plating process, for example, to constitute a step structure S5 having an amount of the step approximately equal to 50 µm. Other features are identical to those in Example 1. According to this Example 5, it is also possible to obtain similar operations and effects to those in the forgoing Example 1.

Here, ones which apply a similar configuration to Example 5 including the nickel hard metal-plated layer 5 on one of the surfaces of the flat auxiliary plate 3 except that the thicknesses (the amounts of the steps) of the hard metal-plated layer 5 are set uniformly equal to 80 µm and 100 µm respectively in terms of the four cylinder holes 2a will be defined as Example 6 and Example 7 (Reference Examples) . According to these Examples 6 and 7, the amounts of the steps are greater than Example 5. Therefore, it is possible to exert higher sealing performances than Example 5 as will be described later.

Moreover, one which applies a similar configuration to Example 5 including the nickel hard metal-plated layer 5 on one of the surfaces of the flat auxiliary plate 3 except that the thicknesses (the amounts of the steps) of the hard metal-plated layer 5 are set respectively equal to 50 µm, 82 µm, 83 µm, and 49 µm from the left in FIG. 1 in terms of the four cylinder holes 2a, so as to correspond to the case where the rigidity distribution of the internal combustion engine concerning the four cylinder bores of the internal combustion engine is lower in #2 and #3 than in #1 and #4, will be defined as Example 8 of the metal gasket for a cylinder head of this invention. In addition, one which applies a similar configuration to Example 5 including the nickel hard metal-plated layer 5 on one of the surfaces of the flat auxiliary plate 3 except that the thicknesses (the amounts of the steps) of the hard metal-plated layer 5 are set respectively equal to 47 µm, 105 µm, 103 µm, and 50 µm from the left in FIG. 1 in terms of the four cylinder holes 2a, so as to correspond to the case where the rigidity distribution of the internal combustion engine concerning the four cylinder bores of the internal combustion engine is lower in #2 and #3 than in #1 and #4, will be defined as Example 9 of the metal gasket for a cylinder head of this invention. According to these Examples 8 and 9, the amounts of the steps correspond to the rigidity distribution of the internal combustion engine. Therefore, it is possible to exert higher sealing performances than the foregoing examples as will be described later.

Meanwhile, one which applies a similar configuration to Example 1 including the nickel hard metal-plated layers 5 on the both surfaces of the flat auxiliary plate 3 except that the total thicknesses (the amounts of the steps) of the hard metal-plated layers 5 are set respectively equal to 82 µm, 49 µm, 51 µm, and 80 µm from the left in FIG. 1 in terms of the four cylinder holes 2a, so as to correspond to the case where rigidity distribution of the internal combustion engine concerning the four cylinder bores of the internal combustion engine is lower in #1 and #4 than in #2 and #3, will be defined as Example 10 of the metal gasket for a cylinder head of this invention. In addition, one which applies a similar configuration to Example 1 including the nickel hard metal-plated layers 5 on the both surfaces of the flat auxiliary plate 3 except that the total thicknesses (the amounts of the steps) of the hard metal-plated layers 5 are set respectively equal to 100 µm, 50 µm, 50 µm, and 100 µm from the left in FIG. 1 in terms of the four cylinder holes 2a, so as to correspond to the case where the rigidity distribution of the internal combustion engine concerning the four cylinder bores of the internal combustion engine is lower in #1 and #4 than in #2 and #3, will be defined as Example 11 of the metal gasket for a cylinder head of this invention. According to these Examples 10 and 11, the amounts of the steps correspond to the rigidity distribution of the internal combustion engine. Therefore, it is possible to exert higher sealing performances than the foregoing examples as will be described later.

Moreover, one which applies a similar configuration to Example 5 including the nickel hard metal-plated layer 5 on one of the surfaces of the flat auxiliary plate 3 except that the thicknesses (the amounts of the steps) of the hard metal-plated layer 5 are set respectively equal to 81 µm, 48 µm, 50 µm, and 81 µm from the left in FIG. 1 in terms of the four cylinder holes 2a, so as to correspond to the case where the rigidity distribution of the internal combustion engine concerning the four cylinder bores of the internal combustion engine is lower in #1 and #4 than in #2 and #3, will be defined as Example 12 of the metal gasket for a cylinder head of this invention. In addition, one which applies a similar configuration to Example 5 including the nickel hard metal-plated layer 5 on one of the surfaces of the flat auxiliary plate 3 except that the thicknesses (the amounts of the steps) of the hard metal-plated layer 5 are set respectively equal to 103 µm, 49 µm, 49 µm, and 102 µm from the left in FIG. 1 in terms of the four cylinder holes 2a, so as to correspond to the case where the rigidity distribution of the internal combustion engine concerning the four cylinder bores of the internal combustion engine is lower in #1 and #4 than in #2 and #3, will be defined as Example 13 of the metal gasket for a cylinder head of this invention. According to these Examples 12 and 13, the amounts of the steps correspond to the rigidity distribution of the internal combustion engine. Therefore, it is possible to exert higher sealing performances than the foregoing examples as will be described later.

Furthermore, ones applying similar configurations to the above-described Examples 1 to 6 and Examples 8 to 13 except that the hard metal-plated layers 5 are made of nickel-phosphorus (Hv 868) will be herein defined as Examples 14 to 25. Examples 14, 15, 18 and 19 are Reference Examples. Meanwhile, ones applying similar configurations to the above-described Examples 1 to 6 and Examples 8 to 13 except that the hard metal-plated layers 5 are made of copper (Hv 95) will be defined as Examples 26 to 37. Examples 26, 27, 30 and 31 are Reference Examples.

FIG. 5 is a cross-sectional view of a metal gasket for a cylinder head according to Example 38 of this invention in a similar position to FIG. 1. This metal gasket 1 of Example 38 is only different from the foregoing Example 8 in that an annular bead 3f of an angled cross-sectional shape is formed on the auxiliary plate 3 so as to overlap the annular beads 2b of the base plates 2 and to allow a top position to face a top position of the annular bead 2b of the base plate 2 on the lower side, and that the hard metal-plated layer 5 is provided on one surface (on the protruding side of the annular bead 3f) of the auxiliary plate 3 in the thickness from 49 to 81 µm (see Table 1-1 for more detail) corresponding to the rigidity distribution of the internal combustion engine, which is made of nickel (the hardness equal to Hv 255) and formed by an electroplating process or a molten metal plating process, for example, to constitute a step structure S6. Other features are identical to those in Example 8. According to this Example 38, the annular beads 2b and 3f are stacked in three layers, and it is possible to obtain a higher sealing performance than the foregoing Example 8 as will be described later.

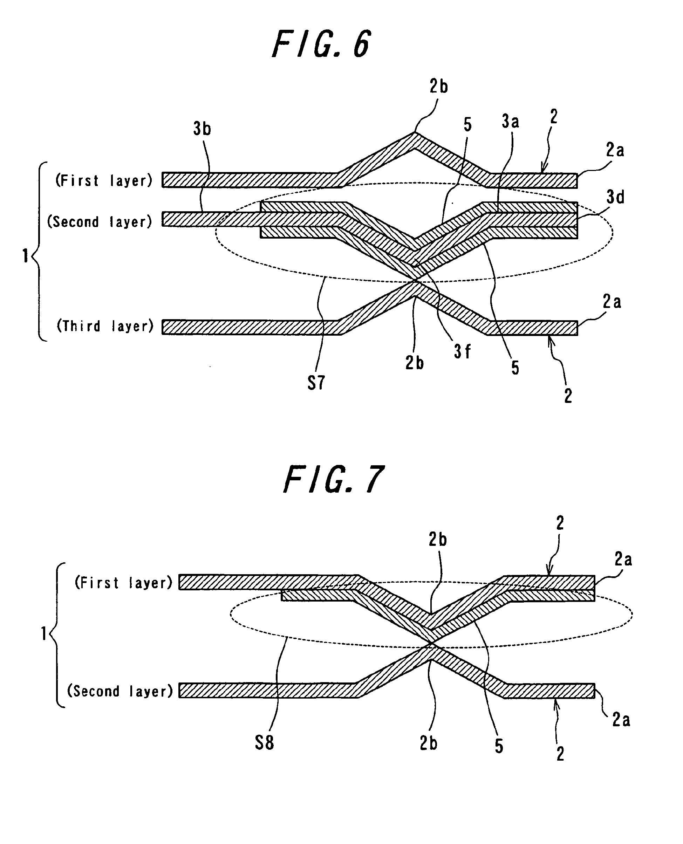

FIG. 6 is a cross-sectional view of a metal gasket for a cylinder head according to Example 39 of this invention in a similar position to FIG. 1. This metal gasket 1 of Example 39 is only different from the foregoing Example 3 in that an annular bead 3f of an angled cross-sectional shape is formed on the auxiliary plate 3 so as to overlap the annular beads 2b of the base plates 2 and to allow a top position to face a top position of the annular bead 2b of the base plate 2 on the lower side, and that the hard metal-plated layers 5 are provided on both surfaces of the auxiliary plate 3 in the total thickness from 47 to 83 µm (see Table 1-1 for more detail) corresponding to the rigidity distribution of the internal combustion engine, which are made of nickel (the hardness equal to Hv 255) and formed by an electroplating process or a molten metal plating process, for example, to constitute a step structure S7. Other features are identical to those in Example 3. According to this Example 39, the annular beads 2b and 3f are stacked in three layers, and it is possible to obtain a higher sealing performance than the foregoing Example 3 as will be described later.

FIG. 7 is a cross-sectional view of a metal gasket for a cylinder head according to Example 40 of this invention in a similar position to FIG. 1. This metal gasket 1 of Example 40 does not include the auxiliary plate 3 between the two base plates 2. However, the respective base plates 2 are similar to those in the foregoing examples. Moreover, in this example, the hard metal-plated layer 5 is provided on one of the base plates 2 (which is located on the upper side in the drawing) on a surface (an inner side surface) facing the other base plate (which is the base plate on the lower side in the drawing) 2 in the thickness from 49 to 82 µm (see Table 1-1 for more detail) corresponding to the rigidity distribution of the internal combustion engine. This hard metal-plated layer 5 is made of nickel (the hardness equal to Hv 255) and formed at a peripheral portion of each of the cylinder holes 2a of the base plate 2 by an electroplating process or a molten metal plating process. When the two base plates 2 are layered over each other, the hard metal-plated layer 5 extends from a position more radially inward than the annular bead 2b to a position radially outward so as to overlap each of the annular beads 2b of the other base plate 2 and to face a top portion of the annular bead 2b, and thereby surrounds each of the cylinder holes 2a on the base plate 2 annularly to constitute a step structure S8.

According to the metal gasket 1 of the above-described Example 40, it is possible to manufacture the gasket at low costs because there is no auxiliary plate 3. Moreover, it is also possible to obtain a substantially equivalent sealing performance to the foregoing Example 1 as will be described later.

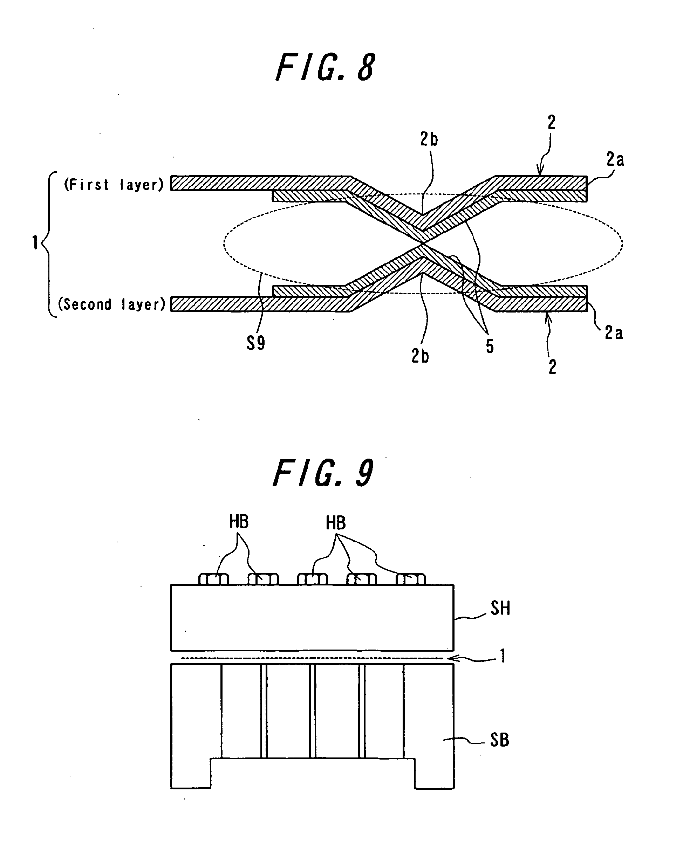

FIG. 8 is a cross-sectional view of a metal gasket for a cylinder head according to Example 41 of this invention in a similar position to FIG. 1. This metal gasket 1 of Example 41 does not include the auxiliary plate 3 between the two base plates 2. However, the respective base plates 2 are similar to those in the foregoing examples. Moreover, in this example, the hard metal-plated layers 5 are provided on the both base plates 2 on surfaces (inner side surfaces) mutually facing the opponent base plates 2 in the total thickness from 51 to 82 µm (see Table 1-1 for more detail) corresponding to the rigidity distribution of the internal combustion engine. These hard metal-plated layers 5 are made of nickel (the hardness equal to Hv 255) and formed at a peripheral portion of each of the cylinder holes 2a of the base plate 2 by an electroplating process or a molten metal plating process. When the two base plates 2 are layered over each other, the hard metal-plated layer 5 extends from a position more radially inward than the annular bead 2b to a position radially outward so as to overlap each of the annular beads 2b of the opponent base plate 2 and to face a top portion of the annular bead 2b, and thereby surrounds each of the cylinder holes 2a on the base plate 2 annularly to constitute a step structure S9.

According to the metal gasket 1 of the above-described Example 41, it is possible to manufacture the gasket at low costs because there is no auxiliary plate 3. Moreover, it is also possible to obtain a substantially equivalent sealing performance to the foregoing Example 3 as will be described later.

The following Table 1-1 to Table 1-5 show comparison of the configurations and the sealing performances among the metal gaskets of the above-described Example 1 to Example 41, a metal gasket of Comparative Example 1 configured to remove the hard metal-plated layers 5 from Example 1, a metal gasket of Comparative Example 2 configured to obtain the same amount of the step as Example 1 by means of butt joint, a metal gasket of Comparative Example 3 provided with soft surface metal-plated layers made of tin (Hv 15) instead of the hard metal-plated layers 5 in Example 1, a metal gasket of Comparative Example 4 configured to obtain constant amounts of steps approximately equal to 50 µm in a similar configuration to Example 38 by means of butt joint and a metal gasket of Comparative Example 4 configured to obtain constant amounts of steps approximately equal to 50 µm in a similar configuration to Example 40 by means of the butt joint. Concerning the sealing limit pressure herein, as shown in FIG. 9, each of the metal gaskets 1 described above is placed between a cylinder block SB and a cylinder head SH, and head bolts HB are tightened at a prescribed axial force (34.4 kN/bolt) to form a specimen by subjecting a piston inside the cylinder bore and a valve in a combustion chamber to a hermetic sealing process. The sealing limit pressure on the tables represents a result of measurement of sealing limit pressure of the specimen by injecting air from an ignition plug hole into the cylinder bore in a room-temperature atmosphere and then increasing pressure inside the cylinder bore.

From these Table 1-1 to Table 1-5, it is apparent that the sealing performances of the metal gaskets of the respective examples described above are considerably higher than those of Comparative Examples adopting similar bead structures

**Table 1-1**

| | | Hard metal-plated layer | | | | | | Number of metal plates | Bead structure | Sealing limit pressure MPa |
|---|---|---|---|---|---|---|---|---|---|---|
| | | Material | Attached surfaces | Amounts of steps µm | | | | | | |
| | | | | #1 | #2 | #3 | #4 | | | |
| Examples | 1* | nickel | both surfaces | 50 | 51 | 50 | 49 | 3 | 3S2B | 8.0 |
| | 2* | ditto | ditto | 80 | 80 | 80 | 80 | 3 | 3S2B | 9.0 |
| | 3 | ditto | ditto | 49 | 81 | 79 | 50 | 3 | 3S2B | 9.9 |
| | 4 | ditto | ditto | 47 | 105 | 103 | 50 | 3 | 3S2B | 10.8 |
| | 5* | ditto | one surface | 50 | 51 | 50 | 49 | 3 | 3S2B | 8.0 |
| | 6* | ditto | ditto | 80 | 80 | 80 | 80 | 3 | 3S2B | 9.1 |
| | 7* | ditto | ditto | 100 | 100 | 100 | 100 | 3 | 3S2B | 10.9 |
| | 8 | ditto | ditto | 50 | 82 | 83 | 49 | 3 | 3S2B | 9.9 |
| | 9 | ditto | ditto | 47 | 105 | 103 | 50 | 3 | 3S2B | 10.8 |
| | 10 | ditto | both surfaces | 82 | 49 | 51 | 80 | 3 | 3S2B | 9.8 |
| | 11 | ditto | ditto | 100 | 50 | 50 | 100 | 3 | 3S2B | 10.9 |

| | | | | | | | | | | |
|---|---|---|---|---|---|---|---|---|---|---|
| *Reference example | | | | | | | | | | |

**Table 1-2**

| | | Hard metal-plated layer | | | | | | Number of metal plates | Bead structure | Sealing limit pressure MPa |
|---|---|---|---|---|---|---|---|---|---|---|
| | | Material | Attached surfaces | Amounts of steps µm | | | | | | |
| | | | | #1 | #2 | #3 | #4 | | | |
| Examples | 12 | nickel | one surface | 81 | 48 | 50 | 81 | 3 | 3S2B | 9.8 |
| | 13 | ditto | ditto | 103 | 49 | 49 | 102 | 3 | 3S2B | 10.8 |
| | 14* | nickel-phosphorus | both surfaces | 48 | 49 | 49 | 50 | 3 | 3S2B | 7.8 |
| | 15* | ditto | ditto | 79 | 81 | 80 | 82 | 3 | 3S2B | 8.9 |
| | 16 | ditto | ditto | 48 | 81 | 79 | 52 | 3 | 3S2B | 10.0 |
| | 17 | ditto | ditto | 47 | 102 | 101 | 49 | 3 | 3S2B | 11.0 |
| | 18* | ditto | one surface | 48 | 49 | 51 | 53 | 3 | 3S2B | 8.2 |
| | 19* | ditto | ditto | 79 | 81 | 82 | 79 | 3 | 3S2B | 9.0 |
| | 20 | ditto | ditto | 48 | 77 | 79 | 49 | 3 | 3S2B | 10.1 |
| | 21 | ditto. | ditto | 49 | 101 | 102 | 49 | 3 | 3S2B | 11.0 |

| | | | | | | | | | | |
|---|---|---|---|---|---|---|---|---|---|---|
| *Reference example | | | | | | | | | | |

**Table 1-3**

| | | Hard meal-plated layer | | | | | | Number of metal plates | Bead structure | sealing limit pressure MPa |
|---|---|---|---|---|---|---|---|---|---|---|
| | | Material | Attached surfaces | Amounts of steps µm | | | | | | |
| | | | | #1 | #2 | #3 | #4 | | | |
| Examples | 22 | nickel-phosphorus | both surfaces | 79 | 48 | 49 | 79 | 3 | 3S2B | 9.9 |
| | 23 | ditto | ditto | 99 | 49 | 51 | 49 | 3 | 3S2B | 11.0 |
| | 24 | ditto | one surface | 79 | 47 | 47 | 79 | 3 | 3S2B | 10.1 |
| | 25 | ditto | ditto | 99 | 49 | 48 | 97 | 3 | 3S2B | 11.1 |
| | 26* | copper | both surfaces | 48 | 48 | 47 | 50 | 3 | 3S2B | 8.0 |
| | 27* | ditto | ditto | 80 | 81 | 82 | 82 | 3 | 3S2B | 9.0 |
| | 28 | ditto | ditto | 50 | 81 | 80 | 53 | 3 | 3S2B | 10.0 |
| | 29 | ditto | ditto | 50 | 102 | 102 | 50 | 3 | 3S2B | 11.1 |
| | 30* | ditto | one surface | 47 | 50 | 50 | 52 | 3 | 3S2B | 8.3 |
| | 31* | ditto | ditto | 80 | 80 | 81 | 80 | 3 | 3S2B | 9.1 |

| | | | | | | | | | | |
|---|---|---|---|---|---|---|---|---|---|---|
| *Reference example | | | | | | | | | | |

**Table 1-4**

| | | Hard metal-plated layer | | | | | | Number of metal plates | Bead structure | Sealing limit pressure MPa |
|---|---|---|---|---|---|---|---|---|---|---|
| | | Material | Attached surfaces | Amounts of steps µm | | | | | | |
| | | | | #1 | #2 | #3 | #4 | | | |
| Examples | 32 | copper | one surface | 47 | 80 | 80 | 50 | 3 | 3S2B | 9.9 |
| | 33 | ditto | ditto | 47 | 103 | 101 | 50 | 3 | 3S2B | 11.0 |
| | 34 | ditto | both surfaces | 80 | 49 | 50 | 80 | 3 | 3S2B | 10.0 |
| | 35 | ditto | ditto | 100 | 51 | 50 | 100 | 3 | 3S2B | 11.1 |
| | 36 | ditto | one surface | 80 | 48 | 48 | 81 | 3 | 3S2B | 10.2 |
| | 37 | ditto | ditto | 100 | 50 | 49 | 100 | 3 | 3S2B | 11.3 |
| | 38 | nickel | one surface | 49 | 81 | 79 | 50 | 3 | 3S3B | 13.5 |
| | 39 | ditto | both surfaces | 47 | 83 | 81 | 50 | 3 | 3S3B | 13.6 |
| | 40 | ditto | one surface | 49 | 84 | 82 | 49 | 2 | 2S2B | 9.4 |
| | 41 | ditto | both surfaces | 51 | 81 | 82 | 54 | 2 | 2S2B | 9.1 |

**Table 1-5**

| | | Hard metal-plated layer | | | | | | Number of metal plates | Bead structure | sealing limit pressure MPa |
|---|---|---|---|---|---|---|---|---|---|---|
| | | Material | Attached surfaces | Amounts of steps µm | | | | | | |
| | | | | #1 | #2 | #3 | #4 | | | |
| Comparative Examples | 1 | no step | | 0 | 0 | 0 | 0 | 3 | | 7.0 |
| | 2 | butt joint | | 50 | 51 | 50 | 49 | 3 | | 8.0 |
| | 3 | tin | both surfaces | 50 | 51 | 50 | 49 | 3 | | 7.2 |
| | 4 | butt joint | | 50 | 51 | 50 | 49 | 3 | | 12.1 |
| | 5 | ditto | | 50 | 51 | 50 | 49 | 2 | | 7.9 |

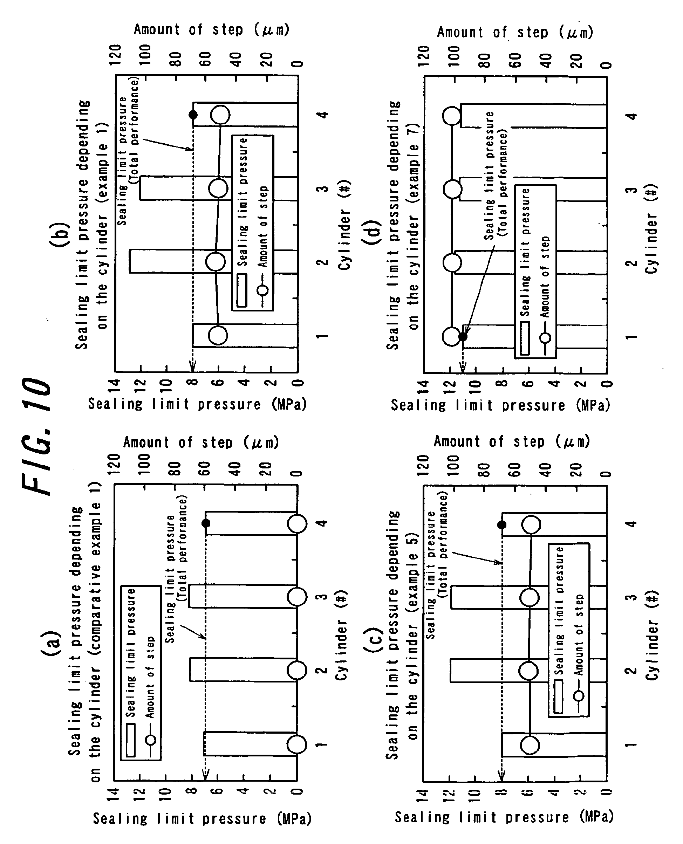

FIGs. 10(a) to 10(d) are explanatory views respectively showing the sealing limit pressure depending on the cylinder (the cylinder bore) in terms of Comparative Example 1 without including the step structure and Examples 1, 5, and 7. From these drawings, it is apparent that the metal gaskets of the above-described examples can improve the sealing properties considerably higher than the one without including the step structure.

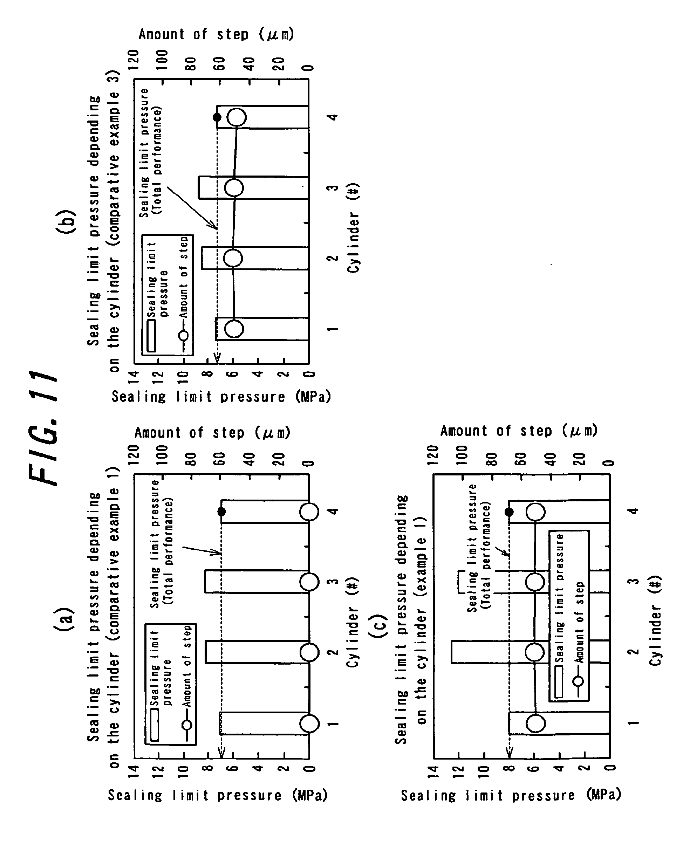

FIGs. 11(a) to 11(c) are explanatory views respectively showing the sealing limit pressure depending on the cylinder (the cylinder bore) in terms of Comparative Example 1 without including the step structure, Comparative Example 3 including the soft surface metal-plated layer, and Example 1. From these drawings, it is apparent that the metal gaskets of the above-described examples can improve the sealing properties higher than the one including the soft surface metal-plated layer.

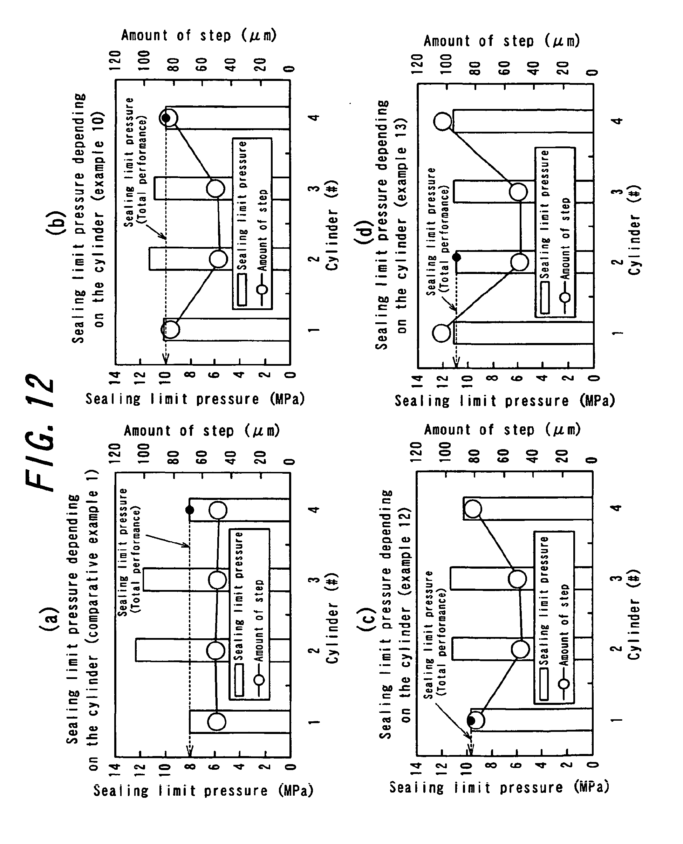

FIGs. 12(a) to 12(d) are explanatory views respectively showing the sealing limit pressure depending on the cylinder (the cylinder bore) applied to the case where the rigidity distribution of the internal combustion engine is lower concerning the cylinder bores #1 and #4 than the cylinder bores #2 and #3, in terms of Comparative Example 2 setting the constant amounts of the steps and Examples 10, 12, and 13 in which the amounts of the steps are increased in the peripheries of the cylinder holes corresponding to the cylinder bores #1 and #4 more than in the peripheries of the cylinder holes corresponding to the cylinder bores #2 and #3. From these drawings, it is apparent that the metal gaskets of the above-described examples can improve the sealing properties considerably higher than the one setting the constant amounts of the steps.

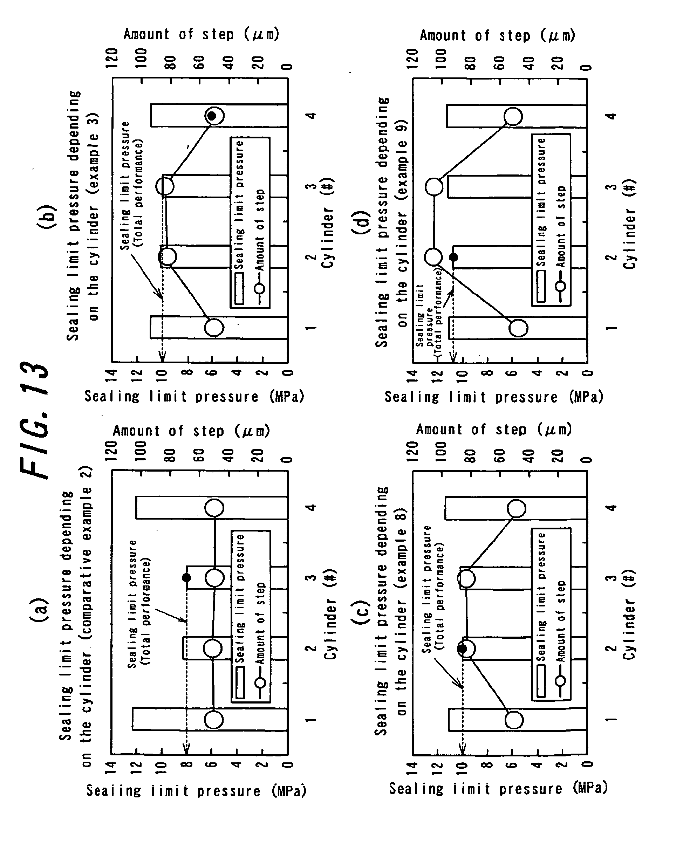

FIGs. 13(a) to 13(d) are explanatory views respectively showing the sealing limit pressure depending on the cylinder (the cylinder bore) applied to the case where the rigidity distribution of the internal combustion engine is lower concerning the cylinder bores #2 and #3 than the cylinder bores #1 and #4, in terms of Comparative Example 2 setting the constant amounts of the steps and Examples 3, 8, and 9 in which the amounts of the steps are increased in the peripheries of the cylinder holes corresponding to the cylinder bores #2 and #3 more than in the peripheries of the cylinder holes corresponding to the cylinder bores #1 and #4. From these drawings; it is apparent that the metal gaskets of the above-described examples can improve the sealing properties considerably higher than the one setting the constant amounts of the steps.

Although this invention has been described based on the illustrated examples, it is to be noted that this invention will not be limited only to the above-described examples. For example, the hard metal-plated layer 5 may be made of iron having the hardness equal to or above Hv 60.

### Industrial Applicability

As described above, according to this invention, it is possible to provide an excellent metal gasket, which is low in price and high in the freedom in controlling an amount of a step.

## Claims

1. A metal gasket for a cylinder head comprising:
two base plates (2) respectively made of metal plates and
layered over each other, each of said base plates (2) including cylinder holes (2a) formed so as to correspond to respective cylinder bores on a cylinder block of an internal combustion engine, annular beads (2b) of an angled cross-sectional shape formed around said respective cylinder holes, coolant holes (2c) formed on outer peripheral portions with respect to said respective annular beads (2b) so as to correspond to coolant jackets on said cylinder block and to coolant holes on a cylinder head of said internal combustion engine, and an outer peripheral bead (2d) having a cross-sectional shape sloping on one side and
being formed in a position so as to totally surround said annular beads and said coolant holes;
said two base plates (2) being either
(i) layered over each other so as directly to contact each other
or
(ii) layered over each other with an auxiliary plate (3) made of metal plate interposed between them;
wherein, at the location of each said annular bead (2b), in case (i) a hard metal-plated layer (5) is formed on either one or both of said two base plates (2) on a surface facing the other base plate (2), and in case (ii) a hard metal-plated layer (5) is formed on at least one surface of said auxiliary plate (3);
each said hard metal-plated layer (5) being configured to extend from a position more radially inward than the respective annular bead to a position radially outward so as to overlap the respective opposed annular bead of said base plates and to face a top portion of the respective opposed annular bead, and thereby to surround each of said cylinder holes on said base plate annularly;
wherein
said hard metal-plated layers (5) have different step thicknesses at respectively different ones of said cylinder holes (2a) in correspondence to distribution of rigidity of the internal combustion engine relative to the plurality of cylinder bores.

2. The metal gasket for a cylinder head according to claim 1, wherein an annular bead having an angled cross-sectional shape is formed on said auxiliary plate so as to overlap said annular bead on said base plate and to allow top positions to face each other.

3. The metal gasket for a cylinder head according to claim 1 or 2 wherein said hard metal-plated layer (5) is made of any of nickel, nickel-phosphorus, and copper, and has hardness equal to or above Hv 60.

## Patentansprüche

1. Metalldichtung für einen Zylinderkopf, umfassend: zwei Basisplatten (2), die jeweils aus Metallplatten bestehen und über einander geschichtet sind, wobei jede der Basisplatten (2) Zylinderlöcher (2a) umfasst, die so ausgebildet sind, dass sie entsprechenden Zylinderbohrungen auf einem Zylinderblock eines Verbrennungsmotors entsprechen, ringförmige Wulste (2b) mit winkliger Querschnittsform, die um die jeweiligen Zylinderlöcher ausgebildet sind, Kühlmittellöcher (2c), die in äußeren Umfangsabschnitten in Bezug auf die jeweiligen ringförmigen Wulste (2b) so ausgebildet sind, dass sie den Kühlmittelmänteln des Zylinderblocks und Kühlmittellöchern an einem Zylinderkopf des Verbrennungsmotors entsprechen, und einen Außenumfangswulst (2d) mit einer Querschnittsform, die an einer Seite schräg ist und so ausgebildet ist, dass sie die ringförmigen Wulste und die Kühlmittellöcher vollständig umgibt;
wobei die beiden Basisplatten (2) entweder
(i) so übereinander geschichtet sind, dass sie einander direkt berühren, oder
(ii) übereinander geschichtet sind, wobei eine Hilfsplatte (3) aus einer Metallplatte zwischen ihnen angeordnet ist;
wobei an der Stelle jedes ringförmigen Wulstes (2b) in Fall (i) eine mit Hartmetall plattierte Schicht (5) auf einer oder beiden der zwei Basisplatten (2) auf einer Oberfläche ausgebildet ist, die der anderen Basisplatte (2) zugewandt ist, und in Fall (ii) eine mit Hartmetall plattierte Schicht (5) auf zumindest einer Oberfläche der Hilfsplatte (3) ausgebildet ist;
wobei jede der mit Hartmetall plattierten Schichten (5) so ausgebildet ist, dass sie sich von einer Position, die sich radial weiter innen befindet als der entsprechende ringförmige Wulst, zu einer Position erstreckt, die sich radial weiter außen befindet, um mit dem entsprechenden gegenüberliegenden ringförmigen Wulst der Basisplatten zu überlappen, einem oberen Abschnitt des entsprechenden gegenüberliegenden ringförmigen Wulstes gegenüber zu liegen und so jedes der Zylinderlöcher auf der Basisplatte ringförmig zu umgeben,
worin
die mit Hartmetall plattierten Schichten (5) an den verschiedenen Zylinderlöchern (2a) entsprechend der Verteilung der Steifigkeit des Verbrennungsmotors in Bezug auf die Vielzahl der Zylinderbohrungen jeweils eine andere Stufendicke aufweisen.

2. Metalldichtung für einen Zylinderkopf nach Anspruch 1, worin ein ringförmiger Wulst mit einer winkligen Querschnittsform auf der Hilfsplatte so ausgebildet ist, dass er mit dem ringförmigen Wulst auf der Basisplatte überlappt und ermöglicht, dass obere Positionen einander gegenüberliegen.

3. Metalldichtung für einen Zylinderkopf nach Anspruch 1 oder 2, worin die mit Hartmetall plattierte Schicht (5) aus einem beliebigen aus Nickel, Nickelphosphor und Kupfer ausgewählten Material besteht und eine Härte von HV 60 oder mehr aufweist.

## Revendications

1. Joint d'étanchéité métallique pour une culasse comprenant:
deux plaques de base (2) réalisées respectivement en plaques métalliques et posées l'une sur l'autre, chacune desdites plaques de base (2) ayant des alésages de cylindre (2a) formés de manière à correspondre à des perçages de cylindre respectifs sur un bloc-cylindres d'un moteur à combustion interne, des bourrelets annulaires (2b) d'une forme angulaire en section transversale formés autour desdits alésages de cylindre respectifs, des trous d'agent de refroidissement (2c) formés sur les portions périphériques extérieures par rapport auxdits bourrelets annulaires respectifs (2b) de manière à correspondre à des chemises d'agent de refroidissement sur ledit bloc-cylindres et à des trous d'agent de refroidissement sur une culasse dudit moteur à combustion interne, et un bourrelet périphérique extérieur (2d) ayant une forme en section transversale inclinée vers un côté et formé en une position de manière à entourer totalement lesdits bourrelets annulaires et lesdits trous d'agent de refroidissement;
les deux plaques de base précitées (2) étant soit
(i) placées l'une sur l'autre de manière à venir directement en contact l'une avec l'autre ou
(ii) placées l'une sur l'autre avec une plaque auxiliaire (3) réalisée en tôle interposée entre elles;
dans lequel, à l'emplacement de chaque bourrelet annulaire précité (2b), dans le cas (i) où une couche métallisée dure (5) est formée sur soit une soit les deux desdites deux plaques de base (2) sur une surface orientée vers l'autre plaque de base (2), et dans le cas (ii) où une couche métallisée dure (5) est formée sur au moins une surface de ladite plaque auxiliaire (3);
chaque couche dure métallisée (5) étant configurée pour s'étendre d'une position qui est davantage radialement à l'intérieur que le bourrelet annulaire à une position radialement vers l'extérieur de manière à chevaucher le bourrelet annulaire respectif opposé desdites plaques de base et pour être orientée vers une portion supérieure du bourrelet annulaire respectif opposé, et pour entourer ainsi chacun desdits alésages de cylindre sur ladite plaque de base annulaire;
où
lesdites couches métallisées dures (5) ont des épaisseurs différentes à des alésages respectivement différents desdits alésages de cylindre (2a) en correspondance avec la distribution de la rigidité du moteur à combustion interne relativement à la pluralité des alésages de cylindre.

2. Joint d'étanchéité métallique pour une culasse selon la revendication 1, dans lequel un bourrelet annulaire d'une forme angulaire en section transversale est formé sur ladite plaque auxiliaire de manière à recouvrir ledit bourrelet annulaire sur ladite plaque de base et à permettre aux portions supérieures de se faire face.

3. Joint d'étanchéité métallique pour une culasse selon la revendication 1 ou 2, dans lequel ladite couche dure métallisée (5) est réalisée en un quelconque de nickel, nickel-phosphore et cuivre, et possède une dureté égale ou supérieure à Hv 60.
